# EUROPÄISCHE PATENTSCHRIFT

(11) **EP 1 331 124 B1**
(45) Veröffentlichungstag und Bekanntmachung des Hinweises auf die Patenterteilung: **14.11.2007**
(21) Anmeldenummer: 03000771.0
(22) Anmeldetag: 14.01.2003
(51) Int. Cl.: B60K 5/12

(54) **Antriebsaggregat für ein Kraftfahrzeug**
Vehicle power train
Ensemble de propulsion pour véhicule automobile

(30) Priorität: 26.01.2002 DE 10202956
(43) Veröffentlichungstag der Anmeldung: 30.07.2003
(73) Patentinhaber: Dr.Ing. h.c. F. Porsche Aktiengesellschaft, 70435 Stuttgart (DE)
(72) Erfinder: Unfried, Claus-Dieter, 71706 Markgröningen (DE); Hülsemann, Ulrich, 75242 Neuhausen (DE)

(56) Entgegenhaltungen:
- EP-A- 0 295 661
- WO-A-91/04184
- FR-A- 787 834
- US-A- 5 035 397
- US-A- 5 915 495

## Beschreibung

Die Erfindung bezieht sich auf ein Antriebsaggregat für ein Kraftfahrzeug, insbesondere einen Personenwagen der Sportwagengattung nach dem Oberbegriff des Patentanspruchs 1.

Es ist ein Antriebsaggregat bekannt, GB 2 270 661 A, das in ein so genanntes Mittelmotorfahrzeug eingebaut ist, und zwar im wesentlichen zwischen einer vorderen und einer hinteren Radachse, jedoch benachbart der hinteren. Dabei wird das Antriebsaggregat durch eine Brennkraftmaschine, eine Kupplung und ein Getriebe mit Differential gebildet. Dieses so gestaltete Antriebsaggregat ermöglicht eine kompakte Bauweise eines beispielsweise zweisitzigen Personenwagens der Sportwagengattung.

Aus der US 5,915,495 (beinhaltet die Merkmale des Oberbegriffs des Anspruch 1) ist ein Fahrzeug bekannt, bei dem die Brennkraftmaschine im hinteren Bereich des Kraftfahrzeuges positioniert ist, wobei ein Antriebsaggregat an mehreren Lagern einer Tragstruktur des Kraftfahrzeuges befestigt ist. Dabei weist ein erstes Lager einen Tragarm auf, der mit einer Gehäusewand des Kurbelgehäuses verbunden ist. Weiterhin sind aus den WO 91/04184 A und US 5,035,397 Fahrzeuge bekannt, bei denen die Brennkraftmaschinen im hinteren Bereich der jeweiligen Fahrzeuge angeordnet sind, wobei die Brennkraftmaschinen mit einer Tragstruktur der jeweiligen Fahrzeuge verbunden sind.

Aus der EP 0 295 661 A2 geht eine Tragstruktur eines Aufbaus eines Kraftfahrzeugs hervor, die an einen hinteren Bereich einer mittleren Rahmenstruktur angegliedert ist und ein Antriebsaggregat, bestehend aus Brennkraftmaschine und Getriebe aufnimmt. Das Antriebsaggregat ist unter Vermittlung von vorderen und hinteren Lagern, beiderseits einer Mittellängsebene des Kraftfahrzeugs angeordnet, mit der die Tragstruktur verbunden ist. Die Lager sind an Enden von Lagerarmen vorgesehen, die von dem Antriebsaggregat weggeführt sind.

Es ist Aufgabe der Erfindung ein Antriebsaggregat für ein Kraftfahrzeug so in einer Tragstruktur eines Aufbaus anzuordnen, dass es zur günstigen Gewichtsverteilung des Kraftfahrzeugs beiträgt und Voraussetzungen geschaffen werden, um die Lager zwischen dem Antriebsaggregat und der Tragstruktur vorteilhaft anzubringen und auszugestalten.

Erfindungsgemäß wird diese Aufgabe durch die Merkmale des Patentanspruchs 1 gelöst. Weitere, die Erfindung ausgestaltende Merkmale sind in den Unteransprüchen enthalten. Die mit der Erfindung hauptsächlich erzielten Vorteile sind darin zu sehen, dass die Lager und die Lageraufnahmen selbst sowie ihre Anordnung an der Tragstruktur nicht nur fahrdynamische, sondern auch schwingungstechnische Ergebnisse schaffen, die vorbildlich sind. Dabei lassen sich die Lager und auch die Lageraufnahmen mit vertretbarem Aufwand realisieren, und zwar insbesondere dann, wenn die Tragstruktur durch eine Hüllvorrichtung gebildet wird, die aus glasfaserverstärktem Kunststoff besteht. Dabei bietet sich an, die erste Lageraufnahme des ersten Lagers in eine aufrechte Schließwand der Hüllvorrichtung zu integrieren und diese Lageraufnahme als eine örtliche Verdickung in der Schließwand auszubilden. Das erste Lager weist eine funktionsgerechte Konstruktion auf, da es einen an einer Zylinderwand der Brennkraftmaschine befestigten Tragarm und einen an der Schließwand angebrachten Konsolenträger aufweist. Die Abstützelemente zwischen Konsolenträger und Tragarm stellen sicher, dass bei einer auf das Antriebsaggregat einwirkenden havariebedingten Relativbewegung eine gezielte Abstützung des Tragarms am Konsolenträger erfolgt. Schließlich arbeitet das zweite Lager und das dritte Lager mit zweiten und dritten Lageraufnahmen zusammen, die sich leicht in die Tragstruktur einarbeiten lassen, wobei die Verbindung des zweiten und des dritten Lagers mit dem Querträger und dessen Anbindung an das Getriebe mit übersichtlichen gestalterischen Mitteln möglich ist.

In der Zeichnung wird ein Ausführungsbeispiel der Erfindung gezeigt, das nachstehend näher beschrieben ist.

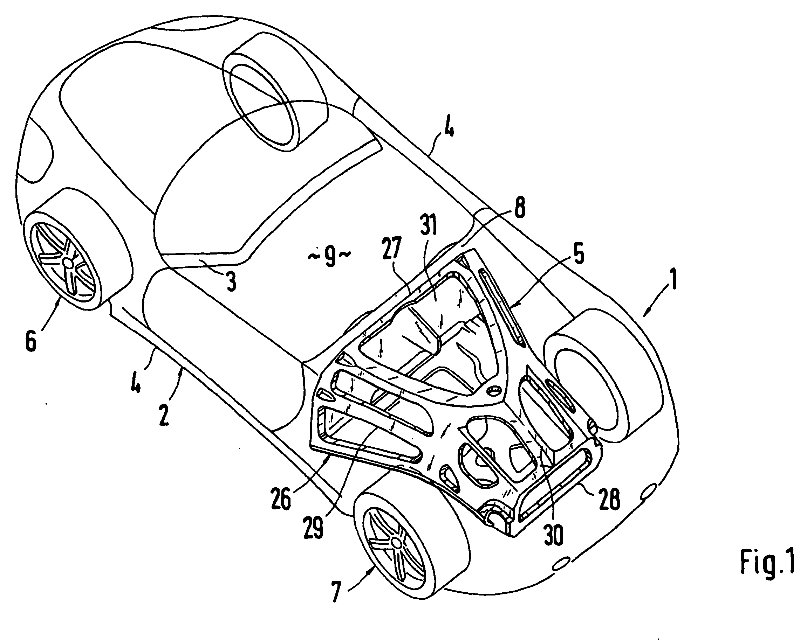

Es zeigen
- Fig. 1: eine Schrägansicht von hinten links auf ein Kraftfahrzeug, das zur Aufnahme eines Antriebsaggregats ausgebildet ist,
- Fig. 2: eine Teilansicht von oben auf das Kraftfahrzeug, in das das Antriebsaggregat eingesetzt ist,
- Fig. 3: eine Einzelheit X der Fig. 2 als Schrägansicht und in größerem Maßstab,
- Fig. 4: eine Ansicht etwa in Pfeilrichtung A der Fig. 3 in größerem Maßstab,
- Fig. 5: eine Ansicht in Pfeilrichtung B der Fig. 4,
- Fig. 6: eine Schrägansicht von hinten links oben auf einen hinteren Bereich des Antriebsaggregats,
- Fig. 7: einen Schnitt nach der Linie VII-VII der Fig. 6,

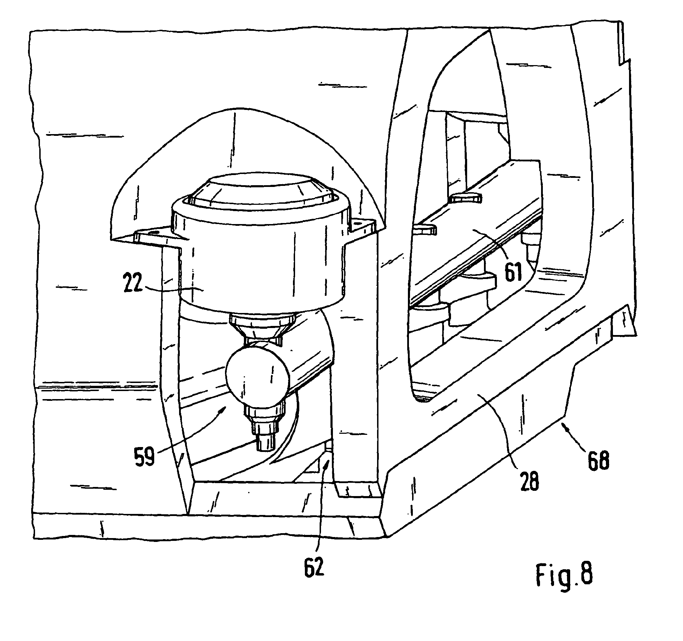

- Fig. 8: eine Schrägansicht etwa in Pfeilrichtung C der Fig. 6.

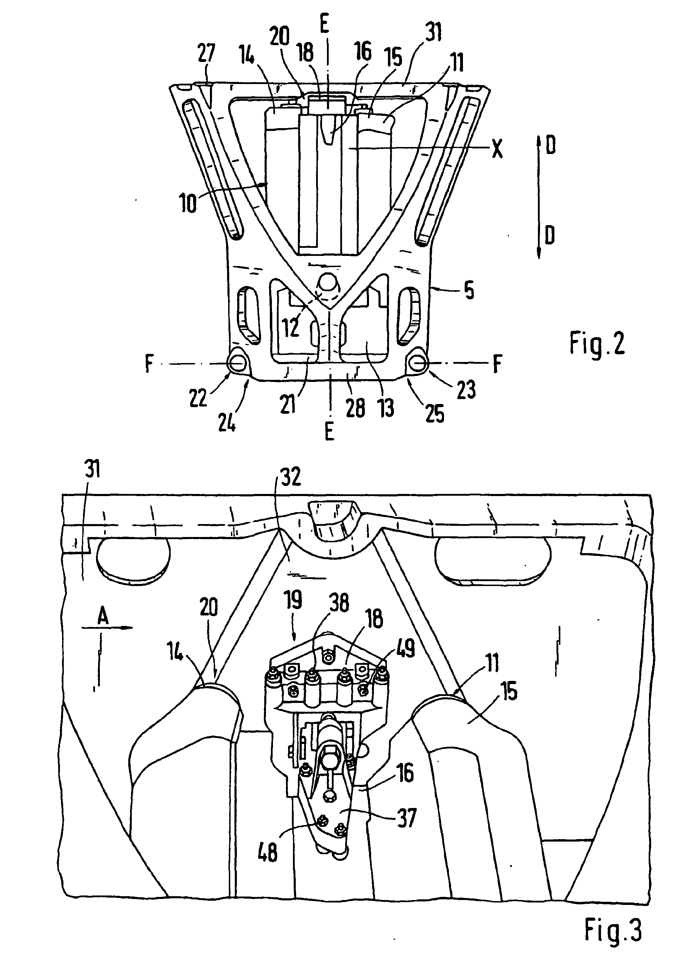

Ein Personenwagen 1 bzw. ein Kraftfahrzeug der Sportwagengattung umfasst einen Aufbau 2 mit einer Windschutzscheibe 3, Türen 4 und einer hinteren Tragstruktur 5; der Aufbau 2 wird dabei von Vorderrädern 6 und Hinterrädern 7 getragen. Die hintere Tragstruktur 5 ist mit einer mittleren Tragstruktur 8 verbunden, die einen nebeneinander angeordnete Sitze - nicht dargestellt - besitzenden Fahrgastraum 9 umfasst, wobei die hintere Tragstruktur 5 zur Aufnahme eines Antriebsaggregats 10 - Fig. 2 - ausgebildet ist. Das Antriebsaggregat 10 ist zwischen den Vorderrädern 6 und den Hinterrädern 7, jedoch benachbart den Hinterrädern 7 - Mittelmotorbauweise - in die Tragstruktur 5 eingesetzt, und es wird gebildet durch eine vormontierte Baueinheit, bestehend aus Brennkraftmaschine 11, Kupplung 12 und Getriebe 13. Die Brennkraftmaschine 11 weist V-förmige Zylinderreihen 14,15 auf, die in Fahrzeuglängsrichtung D-D ausgerichtet sind. Zwischen den Zylinderreihen 14,15 erstreckt sich eine horizontale Gehäusewand 16 - Fig. 3 - eines Kurbelgehäuses 17 der Brennkraftmaschine 11.

Zur Befestigung des Antriebsaggregats 10 an der Tragstruktur 5 ist zum einen ein erstes Lager 18 - Fig. 3 - vorgesehen, das mit einer ersten Lageraufnahme 19 der Tragstruktur 5 zusammenwirkt, welches etwa in einer Mittellängsebene E-E - Fig. 3 - verläuft und an einer freien oder dem Fahrgastraum 9 zugekehrten Stirnseite 20 der Brennkraftmaschine angeordnet ist. Zum anderen sind an einem freien von der Stirnseite 20 entfernten Ende 21 des Getriebes 13 ein zweites Lager 22 und ein drittes Lager 23 angebracht, die außerhalb der Mittellängsebene E-E auf einer Querebene F-F liegen und mit einer zweiten Lageraufnahme 24 und einer dritten Lageraufnahme 25 der Tragstruktur 5 zusammenarbeiten.

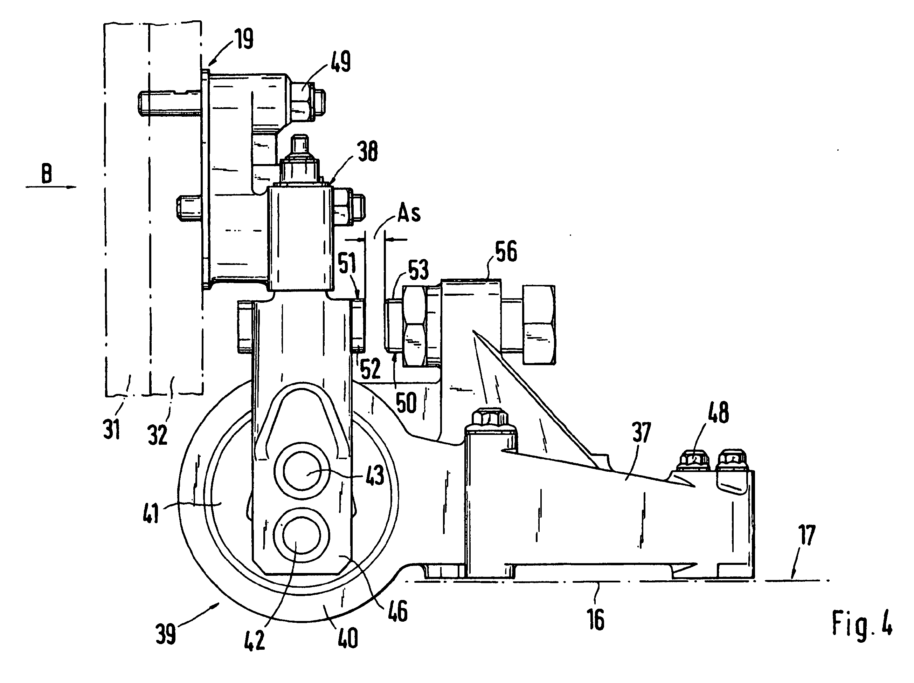

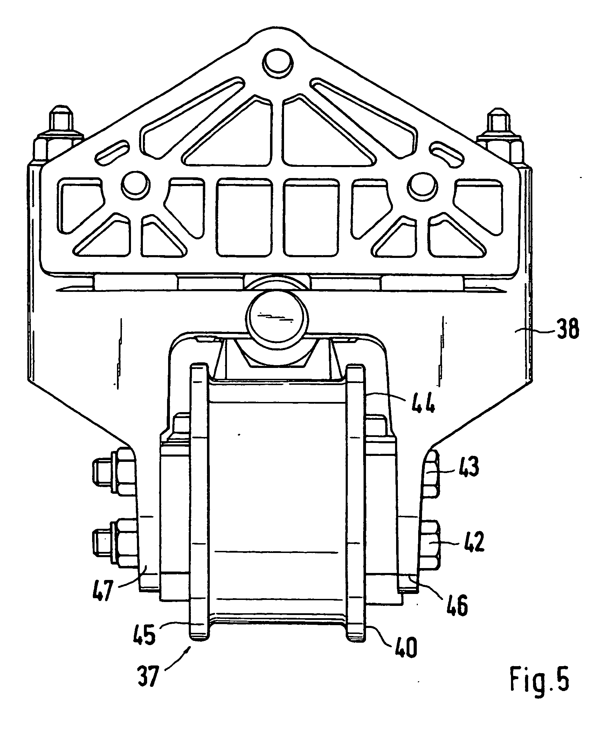

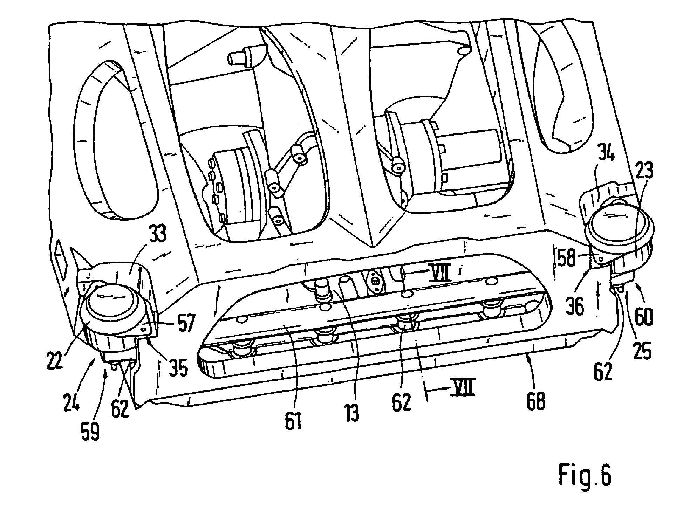

Die Tragstruktur 5 ist eine bspw. das Antriebsaggregat 10 zumindest bereichsweise umgebende Hüllvorrichtung 26, die aus hochfestem insbesondere glasfaserverstärktem Kunststoff besteht. Die Hüllvorrichtung 26 weist einen vorderen Querträger 27 und einen hinteren Querträger 28 auf, die beide ringartig umlaufen und zwischen denen sich mehrere Längsträger 29, 30 erstrecken. Auf der dem Fahrgastraum 9 zugekehrten Seite ist der Querträger 27 mit einer Schließwand 31 versehen, in die die erste Lageraufnahme 19 integriert ist. Die erste Lageraufnahme 19 wird durch eine Verdickung 32 - Fig. 3 und Fig. 4 in der Schließwand 31 gebildet, die ebenfalls aus glasfaserverstärktem Kunststoff besteht. Darüber hinaus werden die Lageraufnahmen 24 und 25 durch Einformungen 33,34 mit horizontalen Auflageflächen 35,36 in der Hüllvorrichtung 26 gebildet - Fig. 6 -.

Das erste Lager 18 besitzt einen an der Gehäusewand 16 des Kurbelgehäuses 17 befestigten Tragarm 37 und einen an der Schließwand 31 angebrachten Konsolenträger 38. Der Tragarm 37 und der Konsolenträger 38 wirken unter Vermittlung eines elastischen Kupplungselements 39 zusammen, das einen Ringträger 40, einen Elastikkörper 41 und Befestigungsbolzen 42,43 umfasst. Der Tragarm 37 ist mit dem Ringträger 40 baulich vereinigt, der Begrenzungsebenen 44, 45 aufweist, welche Begrenzungsebenen 44,45 zwischen aufrechten Gabelarmen 46,47 des Konsolenträgers 38 verlaufen. Der Tragarm 37 ist mittels Schrauben 48 am Kurbelgehäuse 17 in Lage gehalten; der Konsolenträger 38 ist mittels Schrauben 49 an der Schließwand 31 gehalten. Zwischen Tragarm 37 und der Konsolenträger 38 sind ein erstes Abstützelement 50 und ein zweites Abstützelement 51 - Fig. 4 - vorgesehen. Die Abstützelemente 50 und 51 werden dann wirksam, wenn auf das Antriebsaggregat 10 bzw. die Hüllvorrichtung 26 Relativbewegungen, z.B. infolge einer Havarie, einwirken. Das erste Abstützelement 50 und das zweite Abstützelement 51 werden durch horizontale Bolzen 52,53 gebildet, die am Tragarm 37 bzw. am Konsolenträger 38 befestigt sind. Dabei ist zwischen einander zugekehrte Enden 54,55 der Bolzen 52,53 ein definierter Abstand As vorgesehen. Der Bolzen 50 ist in einem Lagerauge 56 unter Zwischenschaltung eins Gewindes axial beweglich und somit verstellbar ausgeführt.

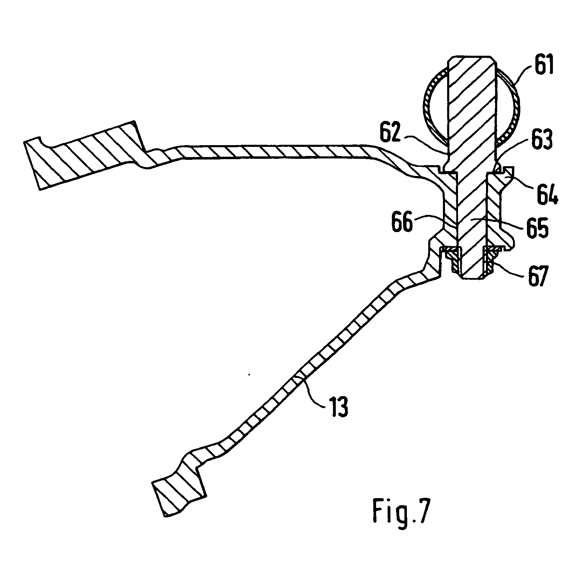

Das zweite Lager 22 und das dritte Lager 23 sind nach Art von Hydrolagern ausgeführt, die mit Stützflächen 57,58 an die Auflageflächen 35,36 der Einformungen 33,34 - Fig. 6 - herangeführt sind. Außerdem sind die Lager 22 uns 23 an freien Enden 59,60 eines Querträgers 61 befestigt, der Ausnehmungen 62,63 in der Hüllvorrichtung 26 durchdringt. Der Querträger 61 ist mit dem Getriebe 13 verbunden - Fig. 7 -, dergestalt, dass am Querträger 61 ein oder mehrere Stützbolzen 62 angebracht sind, wovon jeder sich einerseits mit einem Kragen 63 an einer Konsole 64 des Getriebes 13 abstützt und andererseits mit einem Bolzenabschnitt 65 eine Bohrung 66 der Konsole 64 durchdringt. Schließlich ist der Bolzenabschnitt 65 unter Vermittlung einer Schraubenmutter 67 an der Konsole 64 gehalten.

Das Antriebsaggregat 10 und die Hüllvorrichtung 26 können als vormontierte Baueinheit zusammengesetzt sein, die mit dem Personenwagen 1 bei der Produktion des letzteren vereinigt wird. Sofern das Antriebsaggregat 10 zu einem späteren Zeitpunkt ausgebaut werden soll, ist lediglich ein Unterteil 68 der Hüllvorrichtung 26 abzunehmen, wodurch das Antriebsaggregat 10 nach Lösung der Lager 18, 22 und 23 mittels einer Abschwenkbewegung zur Fahrbahn hin von der besagten Hüllvorrichtung 26 getrennt werden kann.

## Patentansprüche

1. Antriebsaggregat für ein Kraftfahrzeug, insbesondere einen Personenwagen der Sportwagengattung, umfassend eine Brennkraftmaschine (11), eine Kupplung (12) und ein Getriebe (13), die eine Baueinheit bilden, wobei das Antriebsaggregat unter Vermittlung mehrerer Lager an einer Tragstruktur eines Aufbaus des Personenwagens befestigt ist, wobei etwa in einer Mittellängsebene (E-E) des Personenwagens (1) an einer freien Stirnseite (20) der Brennkraftmaschine (11) ein erstes mit einer ersten Lageraufnahme (19) der Tragstruktur (5) zusammenarbeitendes Lager (18) vorgesehen ist und außerhalb der Mittellängsebene (E-E) im Bereich eines freien Endes (21) des Getriebes (13) ein zweites Lager (22) und ein drittes Lager (23) angebracht sind, die zweite und dritte Lageraufnahmen (24 und 25) der Tragstruktur (5) in Lage halten, wobei das erste Lager (18) einen an einer Gehäusewand (16) des Kurbelgehäuses (17) befestigten Tragarm (37) und einen an einer Schließwand (31) der Tragstruktur (5) angebrachten Konsolenträger (38) aufweist,
**dadurch gekennzeichnet, dass**
zwischen dem Tragarm (37) und dem Konsolenträger (38) ein erstes Abstützelement (50) und ein zweites Abstützelement (51) vorgesehen sind, die bei auf das Antriebsaggregat (10), z. B. in Fahrzeuglängsrichtung (D-D), einwirkenden Relativbewegungen abstützend wirksam werden.

2. Antriebsaggregat nach Anspruch 1, **dadurch gekennzeichnet, dass** die Tragstruktur (5) durch eine bspw. das Antriebsaggregat (10) zumindest bereichsweise umgebende Hüllvorrichtung (26) aus hochfestem, insbesondere glasfaserverstärktem Kunststoff gebildet wird, die mit den ersten, zweiten und dritten Lageraufnahmen (19;24,25) versehen ist.

3. Antriebsaggregat nach Anspruch 2, **dadurch gekennzeichnet, dass** die erste Lageraufnahme (19) an einer aufrechten Schließwand (31) der Tragstruktur (5) vorgesehen ist.

4. Antriebsaggregat nach Anspruch 3, **dadurch gekennzeichnet, dass** die erste Lageraufnahme (19) eine örtliche Verdickung (32) in der Schließwand (31) umfasst.

5. Antriebsaggregat mit einer vorzugsweise V-förmige Zylinderreihen aufweisenden Brennkraftmaschine, zwischen denen sich eine bspw. horizontale Gehäusewand erstreckt nach einem oder mehreren der vorangehenden Ansprüche, **dadurch gekennzeichnet, dass** der Tragarm (37) und der Konsolenträger (38) unter Vermittlung eines elastisches Kupplungselements (39) zusammenwirkt, das einen Ringträger (40), einen Elastikkörper (41) und Befestigungsbolzen (42,43) umfasst.

6. Antriebsaggregat nach Anspruch nach Anspruch 5, **dadurch gekennzeichnet, dass** der Tragarm (37) mit dem Ringträger (40) baulich vereinigt ist, dessen Begrenzungsebenen (44,45) zwischen aufrechten Gabelarmen (46,47) des Konsolenträgers (38) verlaufen.

7. Antriebsaggregat nach Anspruch 1, **dadurch gekennzeichnet, dass** das erste Abstützelement (50) und das zweite Abstützelement (51) durch horizontal ausgerichtete mit definiertem Abstand (As) zueinander angeordneten Bolzen (52,53) gebildete wird.

8. Antriebsaggregat nach Anspruch 1, **dadurch gekennzeichnet, dass** in die Tragstruktur (5) die Lageraufnahmen (24,25) für das zweite Lager (22) und das dritte Lager (23) eingearbeitet sind.

9. Antriebsaggregat nach einem der Ansprüche 1 bis 8, **dadurch gekennzeichnet, dass** das zweite Lager (22) und das dritte Lager (23) an einem Querträger (61) befestigt sind, der mit dem Getriebe (13) verbunden ist.

10. Antriebsaggregat nach Anspruch 9, **dadurch gekennzeichnet, dass** am Querträger (61) ein oder mehrere Stützbolzen (62) vorgesehen sind, die sich einerseits mit Kragen (63) an Konsolen (64) des Getriebes (13) abstützen und andererseits mit Bolzenabschnitten (65) die Konsolen (64) durchdringen, welche Bolzenabschnitte (65) unter Vermittlung von Schraubenmuttern (67) an den Konsolen (64) gehalten sind.

## Claims

1. A drive assembly for a motor vehicle, especially a passenger vehicle of the sports car type, comprising an internal-combustion engine (11), a clutch (12) and a transmission (13) which together form a structural unit, wherein the drive assembly is fixed to a supporting structure of a body of the passenger vehicle by means of a plurality of bearings, wherein a first bearing (18), which co-operates with a first bearing receiver (19) on the supporting structure (5), is provided on a free end (20) of the internal-combustion engine (11) approximately in a central longitudinal plane (E-E) of the passenger vehicle (1), and a second bearing (22) and a third bearing (23) are mounted in the region of a free end (21) of the transmission (13) outside the central longitudinal plane (E-E) and are held in position by second and third bearing receivers (24 and 25) on the supporting structure (5), wherein the first bearing (18) has a carrying arm (37) fixed to a wall (16) of the crankcase (17), and a bracket carrier (38) mounted on a closing wall (31) of the supporting structure (5), **characterised in that** a first supporting member (50) and a second supporting member (51) are provided between the carrying arm (37) and the bracket carrier (38) and have a supporting effect in the event of relative movements acting on the drive assembly (10), e.g. in the vehicle longitudinal direction (D-D).

2. A drive assembly according to claim 1, **characterised in that** the supporting structure (5) is formed by a covering device (26) which, for example, at least partially surrounds the drive assembly (10) and is made of high-strength, especially glass-fibre-reinforced plastics and which is provided with the first, second and third bearing receivers (19; 24, 25).

3. A drive assembly according to claim 2, **characterised in that** the first bearing receiver (19) is provided on an upright closing wall (31) of the supporting structure (5).

4. A drive assembly according to claim 3, **characterised in that** the first bearing receiver (19) comprises a local thickening (32) in the closing wall (31).

5. A drive assembly with an internal-combustion engine preferably having V-shaped cylinder banks, between which an e.g. horizontal housing wall extends, according to one or more of the preceding claims, **characterised in that** the carrying arm (37) and the bracket carrier (38) co-operate by means of a resilient clutch member (39) comprising a ring carrier (40), a resilient body (41) and fastening bolts (42, 43).

6. A drive assembly according to claim 5, **characterised in that** the carrying arm (37) is structurally joined to the ring carrier (40), the boundary planes (44, 45) of which extend between upright fork arms (46, 47) of the bracket carrier (38).

7. A drive assembly according to claim 1, **characterised in that** the first supporting member (50) and the second supporting member (51) are formed by horizontally orientated bolts (52, 53) arranged with defined mutual spacing (As).

8. A drive assembly according to claim 1, **characterised in that** the bearing receivers (24, 25) for the second bearing (22) and the third bearing (23) are incorporated into the supporting structure (5).

9. A drive assembly according to any one of claims 1 to 8, **characterised in that** the second bearing (22) and the third bearing (23) are fixed to a transverse member (61) connected to the transmission (13).

10. A drive assembly according to claim 9, **characterised in that** one or more supporting bolts (62) are provided on the transverse member (61) and, on the one hand, have collars (63) which are supported against brackets (64) of the transmission (13) and, on the other hand, have bolt portions (65) extending through the brackets (64), which bolt portions (65) are held on the brackets (64) by means of threaded nuts (67).

## Revendications

1. Groupe moteur pour un véhicule automobile, en particulier un véhicule de tourisme du type véhicule de sport, comportant un moteur à combustion interne (11), un embrayage (12) et une boîte de vitesses (13), qui forment ensemble une unité modulaire, le groupe moteur étant fixé par l'intermédiaire de plusieurs paliers contre une structure de support d'une carrosserie du véhicule de tourisme, sachant que, sur une face frontale libre (20) du moteur (11), sensiblement dans un plan médian longitudinal (E-E) du véhicule (1), il est prévu un premier palier (18) coopérant avec un premier logement de palier (19) de la structure de support (5) et, en dehors du plan médian longitudinal (E-E), dans la zone d'une extrémité libre (21) de la boîte de vitesses (13), sont montés un deuxième palier (22) et un troisième palier (23), qui sont maintenus en position par un deuxième et un troisième logement de palier (24 et 25) de la structure de support (5), le premier palier (18) comportant un bras de support (37), fixé contre une paroi (16) du carter de vilebrequin (17), et une console en porte-à-faux (38), montée contre une paroi de fermeture (31) de la structure de support (5), **caractérisé en ce que**, entre le bras de support (37) et la console en porte-à-faux (38), il est prévu un premier élément d'appui (50) et un deuxième élément d'appui (51), qui font fonction de support en présence de mouvements relatifs agissant sur le groupe moteur (10), par exemple dans le sens longitudinal (D-D) du véhicule.

2. Groupe moteur selon la revendication 1, **caractérisé en ce que** la structure de support (5) est formée par un dispositif de gainage (26), qui entoure au moins par zones le groupe moteur (10) et est réalisé dans une matière plastique très résistante, en particulier renforcée par des fibres de verre, et qui est muni d'un premier, d'un deuxième et d'un troisième logement de palier (19 ; 24, 25).

3. Groupe moteur selon la revendication 2, **caractérisé en ce que** le premier logement de palier (19) est prévu sur une paroi de fermeture (31) verticale de la structure de support (5).

4. Groupe moteur selon la revendication 3, **caractérisé en ce que** le premier logement de palier (19) est formé par un renflement (32) local dans la paroi de fermeture (31).

5. Groupe moteur avec un moteur à combustion interne, comportant des rangées de cylindres, qui sont disposées en V et entre lesquelles s'étend une paroi horizontale par exemple, selon l'une quelconque des revendications précédentes, **caractérisé en ce que** le bras de support (37) et la console en porte-à-faux (38) coopèrent au moyen d'un élément d'accouplement (39) élastique, qui comporte un support annulaire (40), un corps élastique (41) et des boulons de fixation (42, 43).

6. Groupe moteur selon la revendication 5, **caractérisé en ce que** le bras de support (37) est réuni sur le plan constructif au support annulaire (40), dont les plans de délimitation (44, 45), s'étendent entre des bras en fourche (46, 47) verticaux de la console en porte-à-faux (38).

7. Groupe moteur selon la revendication 1, **caractérisé en ce que** le premier élément d'appui (50) et le deuxième élément d'appui (51) sont formés par des boulons (52, 53) orientés horizontalement et situés à une distance (As) définie l'une de l'autre.

8. Groupe moteur selon la revendication 1, **caractérisé en ce que** les logements de palier (24, 25) pour le deuxième palier (22 et le troisième palier (23) sont ménagés dans la structure de support (5).

9. Groupe moteur selon l'une quelconque des revendications 1 à 8, **caractérisé en ce que** le deuxième palier (22) et le troisième palier (23) sont fixés contre une traverse (61) qui est assemblée à la boîte de vitesses (13).

10. Groupe moteur selon la revendication 9, **caractérisé en ce que** sur la traverse (61), il est prévu un ou plusieurs boulons de support (62) qui, d'une part, sont en appui par des collerettes (63) contre des consoles (64) de la boîte de vitesses (13) et, d'autre part, des tronçons de boulon (65) traversent les console (64), lesquels tronçons de boulon (65) sont maintenus contre les consoles (64) au moyen d'écrous taraudés (67).
